# EUROPÄISCHE PATENTSCHRIFT

(11) **EP 2 241 592 B1**
(45) Veröffentlichungstag und Bekanntmachung des Hinweises auf die Patenterteilung: **12.10.2011**
(21) Anmeldenummer: 10157459.8
(22) Anmeldetag: 24.03.2010
(51) Int. Cl.: C08K 5/18, C08K 3/22

(54) **Kautschukmischung**
Rubber compound
Mélange de caoutchouc

(30) Priorität: 08.04.2009 DE 102009003764
(43) Veröffentlichungstag der Anmeldung: 20.10.2010
(73) Patentinhaber: Continental Reifen Deutschland GmbH, 30165 Hannover (DE)
(72) Erfinder: Weinreich, Hajo, Dr., 31552 Apelern (DE); De Risi, Francesca Romana, Dr., 30161, Hannover (DE); Meissner, Steffi, 31552, Rodenberg (DE); Rose, Christoph, Dr., 30659, Hannover (DE)
(74) Vertreter: Widjaja, Wira

(56) Entgegenhaltungen:
- WO-A2-02/50206
- DE-A1- 2 130 118
- US-B1- 6 409 959
- DATABASE WPI Week 200724 Thomson Scientific, London, GB; AN 2007-235343 XP002588578 -& JP 2007 031578 A (YOKOHAMA RUBBER CO LTD) 8. Februar 2007 (2007-02-08)

## Beschreibung

Die Erfindung betrifft eine schwefelvernetzbare Kautschukmischung, enthaltend zumindest einen Dienkautschuk, zumindest ein p-Phenylendiaminderivat, zumindest ein Alkylamin und Zinkoxid. Die Erfindung betrifft ferner einen Reifen, der zumindest zum Teil aus einer mit Schwefel vulkanisierten Kautschukmischung besteht.

Bei der Herstellung von Gummiprodukten ist es seit langem bekannt, für eine höhere Vulkanisationsgeschwindigkeit und/oder eine Verbesserung der Vulkanisateigenschaften den Kautschukmischungen Vulkanisationsbeschleuniger zuzusetzen. Als Vulkanisationsbeschleuniger kommen dabei unterschiedliche Typen, wie Thiazolbeschleuniger, Guanidinbeschleuniger, Thiurambeschleuniger, Dithiocarbamatbeschleuniger, Aminbeschleuniger oder Thioharnstoffe, zum Einsatz. Zu den Aminbeschleunigern zählen z. B. Cyclohexylamin, Dibutylamin und Polyethylenpolyamine. Durch die Kombination verschiedener Beschleunigertypen kann die Vulkanisationsgeschwindigkeit weiter erhöht werden (Zweitbeschleunigereffekt).

Bei den vorgenannten organischen Vulkanisationsbeschleunigern ist es üblich, zur Entfaltung der vollen Wirksamkeit Beschleunigeraktivatoren zuzugeben. Zu diesen Aktivatoren zählt Zinkoxid, das den Schwefel durch Komplexbildung für die Vulkanisation aktiviert. Das System Kautschuk-Schwefel-Beschleuniger-Zinkoxid kann zusätzlich durch die Zugabe von Fettsäuren aktiviert werden. Auf die gleiche Weise wirken auch Amine (z. B. Mono-, Di-, Triethanolamin, Mono-, Dibutylamin, Cyclohexylethylamin, Dibenzylamin), wobei sich allgemein sagen lässt, dass eine Erhöhung der pH-Wertes zu einer Aktivierung der Vulkanisation führt.

Ferner ist man bestrebt, Gummiprodukte vor Schädigungen und Eigenschaftseinbußen durch Alterung zu schützen. Im Wesentlichen sind folgende Prozesse für die Alterung von Gummiprodukten verantwortlich: Thermooxidation, Autooxidation, Ermüdungsrissbildung, Ozonrissbildung, UV-Alterung, Alterung durch Hydrolyse, Wärmealterung, Nachvernetzung und Reversion. Um diesen Prozessen entgegen zu wirken, ist es seit langem bekannt, den Kautschukmischungen Alterungs-, Ermüdungs- und Ozonschutzmittel zuzugeben. Alterungsschutzmittel wirken im Wesentlichen durch Abspaltung von H-Atomen unter Bildung reaktionsträger Radikale, die die radikalisch ablaufende Oxidation in der Kautschukkette stoppen. Als Alterungsschutzmittel werden Substanzen wie z. B. N-(1,3-Dimethylbutyl)-N'-phenyl-p-phenylendiamin (6PPD), N-Isopropyl-N'-phenyl-p-phenylendiamin (IPPD) und 2,2,4-Trimethyl-1,2-dihydrochinolin (TMQ) und wie sie beispielsweise aus J. Schnetger, Lexikon der Kautschuktechnik, 3. Auflage, Hüthig Verlag, Heidelberg, 2004, S. 36-40 bekannt sind, eingesetzt.

Oft werden durch die Zugabe von Vulkanisationsbeschleunigern, Aktivatoren und Alterungsschutzmittel jedoch gewünschte Vulkanisateigenschaften in Mitleidenschaft gezogen.

Der Erfindung liegt nun die Aufgabe zugrunde, eine Kautschukmischung bereitzustellen, die sich durch eine hohe Vulkanisationsgeschwindigkeit und hohe Ozonbeständigkeit bei verbesserter Zugfestigkeit und verbesserter Reißdehnung auszeichnet.

Gelöst wird die Aufgabe erfindungsgemäß dadurch, dass die Kautschukmischung
- zumindest einen Dienkautschuk,
- mehr als 1,5 phr zumindest eines p-Phenylendiaminderivats,
- 0,01 bis 0,5 phr zumindest eines Alkylamins und
- 1 bis 5 phr Zinkoxid enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Es wurde festgestellt, dass durch die spezielle Kombination von zumindest einem p-Phenylendiaminderivat mit zumindest einem Alkylamin und Zinkoxid in den genau angegebenen Mengen Vulkanisate erhalten werden können, die sich durch eine überraschend hohe Reißdehnung und Zugfestigkeit bei gleichzeitig besonders hoher Ozonbeständigkeit auszeichnen. Auch die Vulkanisationsgeschwindigkeit ist bei den erfindungsgemäßen Mischungen sehr hoch, so dass eine große Produktivität bei der Herstellung von Gummiprodukten erzielt werden kann.

Das p-Phenylendiaminderivat wird in Mengen von mehr als 1,5 phr der Mischung zugesetzt. Bei weniger als 1,5 phr p-Phenylendiaminderivat verschlechtert sich die Ozonbeständigkeit deutlich. Vorzugsweise beträgt der Anteil am p-Phenylendiaminderivat in der Mischung 1,5 bis 4,5 phr. In diesem Bereich erzielt man bei noch günstigem Mischungspreis ein hohe Ozonbeständigkeit bei stark verbesserter Reißdehnung und Zugfestigkeit.

Als p-Phenylendiaminderivate können sowohl symmetrische, am Stickstoff substituierte als auch unsymmetrische, am Stickstoff substituierte Derivate eingesetzt werden. Zu den symmetrisch substituierten Derivaten zählen N,N'Diaryl-p-phenylendiamine wie N,N'Di-β-naphthyl-p-phenylendiamin (DNPD) oder N,N'Dialkyl-p-phenylendiamine wie N,N'-Bis-(1,4-dimethylpentyl)-p-phenylendiamin (77PD). Bevorzugt werden jedoch unsymmetrisch substituierte N-Alkyl-N`-aryl-p-phenylendiamine, wie N-Isopropyl-N'-phenyl-p-phenylendiamin (IPPD), verwendet, die bei den Vulkanisaten gute statische und dynamische Eigenschaften bewirken.

Gemäß einer vorteilhaften Weiterbildung der Erfindung ist das unsymmetrisch substituierte N-Alkyl-N'-aryl-p-phenylendiamin N-(1,3-Dimethylbutyl)-N'-phenyl-p-phenylendiamin (6PPD). Dieses p-Phenylendiaminderivat zeichnet sich durch eine geringe Flüchtigkeit aus und wird aus Vulkanisaten nicht so stark durch Wasser herausgelaugt, so dass seine Wirkung als Alterungs- und Ozonschutzmittel länger anhält.

Das Alkylamin ist in Mengen von 0,01 bis 0,5 phr in der Mischung enthalten. Vorzugsweise werden 0,1,bis 0,3 phr des Alkylamins zugesetzt. Bei mehr als 0,3 phr des Alkylamins sind die Verbesserungen in den Vulkanisateigenschaften Reißdehnung und Zugfestigkeit nicht mehr so ausgeprägt.

Als Alkylamine kommen sämtliche dem Fachmann bekannten Amine in Frage. Bevorzugt wird jedoch ein Alkylamin, das eine Alkylgruppe mit zumindest 5 Kohlenstoffatomen aufweist, verwendet. Diese Alkylamine zeigen im Hinblick auf die Vulkanisationskinetik die größten Vorteile.

Gemäß einer bevorzugten Weiterbildung der Erfindung ist das Alkylamin Hexadecylamin, was kommerziell erhältlich und gut in Kautschukmischungen einmischbar ist.

Die erfindungsgemäße Kautschukmischung enthält 1 bis 5 phr, vorzugsweise 2 bis 3 phr, Zinkoxid. Bei geringeren Mengen an Zinkoxid verschlechtern sich die Reißdehnung und die Zugfestigkeit deutlich.

Als Zinkoxid kann jedes, dem Fachmann bekannte Zinkoxid eingesetzt werden, wobei die Partikelgrößen des Zinkoxids auch den nanoskaligen Bereich betreffen können.

Die schwefelvernetzbare Kautschukmischung enthält zumindest einen Dienkautschuk. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der erfindungsgemäßen Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (10-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden kann. Die S-SBR können auch gekoppelt und endgruppenmodifiziert sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk, Ethylen-Propylen-Dien-Kautschuk (EPDM) oder modifizierte Dienkautschuke enthalten. Die modifizierten Dienkautschuke können auf lösungs- oder emulsionpolymerisiertem Styrol-Butadienkautschuk basieren. Bei der Modifizierung kann es sich um solche mit Hydroxylgruppen und/oder Epoxygruppen und/oder Siloxangruppen und/oder Aminogruppen und/oder Aminosiloxan und/oder Carboxylgruppen und/oder Phthalocyaningruppen handeln.

Die Kautschukmischung kann als Füllstoff zumindest Ruß und/oder Kieselsäure in üblichen Mengen enthalten.

Die verwendeten Ruße weisen bevorzugt folgende Charakteristika auf: DBP-Zahl (gemäß ASTM D 2414) 90 bis 200 mL/100 g, CTAB-Zahl (gemäß ASTM D 3765) 80 bis 170 m²/g und Iodadsorptionszahl (gemäß ASTM D 1510) 10 bis 250 g/kg. Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff Oberfläche (BET-Oberfläche) (gemäß DIN 66131 und 66132) von 35 bis 350 m²/g, vorzugsweise von 145 bis 270 m²/g und eine CTAB-Oberfläche (gemäß ASTM D 3765) von 30 bis 350 m²/g, vorzugsweise von 120 bis 285 m²/g, aufweist. Derartige Kieselsäuren führen z. B. in Kautschukmischungen für Reifenlaufstreifen zu besonders guten physikalischen Eigenschaften der Vulkanisate. Außerdem können sich Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs VN3 (Handelsname) der Firma Degussa als auch hoch dispergierte Kieselsäuren, so genannte HD-Kieselsäuren (z. B. Ultrasil 7000 der Firma Degussa), zum Einsatz kommen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: - SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden.

Die Silan-Kupplungsagenzien werden in Mengen von 0,2 bis 30 Gewichtsteilen, vorzugsweise 1 bis 15 Gewichtsteilen, bezogen auf 100 Gewichtsteile Füllstoff, insbesondere Kieselsäure, eingesetzt, da dann eine optimale Anbindung des Füllstoffes an den oder die Kautschuke erfolgen kann.

Die Kautschukmischung kann außerdem noch andere Füllstoffe, wie beispielsweise Alumosilicate, Kreide, Stärke, Magnesiumoxid, Titandioxid oder Kautschukgele enthalten.

Die Kautschukmischung kann außer den genannten Substanzen noch andere Zusatzstoffe, wie z. B. Weichmacher (z. B. aromatische, naphthenische oder paraffinische Mineralölweichmacher, MES (mild extraction solvate) oder TDAE (treated distillate aromatic extract) oder flüssige Polymere, wie z. B. flüssiges Polybutadien) aufweisen.

Des Weiteren kann die erfindungsgemäße Kautschukmischung übliche Zusatzstoffe in üblichen Gewichtsteilen enthalten. Zu diesen Zusatzstoffen zählen weitere Alterungsschutzmittel, wie 2,2,4-Trimethyl-1,2-dihydrochinolin (TMQ) und andere Substanzen, wie sie beispielsweise aus J. Schnetger, Lexikon der Kautschuktechnik, 3. Auflage, Hüthig Verlag, Heidelberg, 2004, S. 36-40 bekannt sind, weitere Aktivatoren, wie z. B. Fettsäuren (z. B. Stearinsäure), Wachse, Harze und Mastikationshilfsmittel, wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen Vulkanisationsbeschleuniger, Vulkanisationsverzögerer und Vulkanisationsaktivatoren in üblichen Mengen enthalten. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N`-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht.

Die Mischung kann für unterschiedliche Reifenbauteile eingesetzt werden. Beispielsweise kann die Mischung für Laufstreifen von Reifen eingesetzt werden. Dazu wird die Mischung in die Form eines Laufstreifens gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Die Mischung kann aber auch für sonstige Reifenbauteile, wie Seitenwände, Gummierungsmischungen, Innenseelen, Kernreiter usw., verwendet werden.

Die erfindungsgemäße Kautschukmischung kann auch für andere Gummiartikel wie Riemen, Gurte, Förderbänder oder Schläuche eingesetzt werden.

Die Erfindung soll nun anhand von Vergleichs- und Ausführungsbeispielen, die in der Tabelle 1 zusammengefasst sind, näher erläutert werden.

Die Vergleichsmischungen sind mit V, die erfindungsgemäße Mischung ist mit E gekennzeichnet. In den Mischungen der Tabelle 1 wurden die Mengen an N-(1,3-Dimethylbutyl)-N'-phenyl-p-phenylendiamin (6PPD), Hexadecylamin und Zinkoxid variiert.

Die Mischungsherstellung erfolgte unter üblichen Bedingungen in zwei Stufen in einem Labortangentialmischer. Es wurden die Umsatzgeschwindigkeiten bei 30 % (k₃₀) und 90 % (k₉₀) Vernetzung über ein rotorloses Vulkameter (MDR = Moving Disc Rheometer) gemäß DIN 53 529 ermittelt und des Verhältnis aus diesen beiden Geschwindigkeiten als Maß für die Vernetzungscharakteristik gebildet. Je höher der Quotient aus der Umsatzgeschwindigkeit bei 30 % und bei 90 % Vernetzung, desto schneller verläuft die Reaktion. Aus sämtlichen Mischungen wurden Prüfkörper durch 20 minütige Vulkanisation unter Druck bei 160 °C hergestellt und mit diesen Prüfkörpern die Reißdehnung und die Zugfestigkeit bei Raumtemperatur gemäß DIN 53 504 ermittelt. Ferner wurde mit den Vulkanisaten eine dynamische Ozonprüfung bei 40 °C, 50 pphm Ozon und einer Dehnung von 0 bis 20 % bei einer Frequenz von 0,5 Hz über 24 und 120 h mit anschließender subjektiver Bewertung der Proben (0 = ohne Risse, 4 = Probe zerstört) durchgeführt.

**Tabelle 1**

| **Bestandteile [phr]** | **1(V)** | **2(V)** | **3(V)** | **4(V)** | **5(V)** | **6(V)** | **7(V)** | **8(V)** | **9(E)** | **10(E)** | **11(E)** |
|---|---|---|---|---|---|---|---|---|---|---|---|
| Naturkautschuk | 50 | 50 | 50 | 50 | 50 | 50 | 50 | 50 | 50 | 50 | 50 |
| BR³ | 20 | 20 | 20 | 20 | 20 | 20 | 20 | 20 | 20 | 20 | 20 |
| E-SBR^{b} | 30 | 30 | 30 | 30 | 30 | 30 | 30 | 30 | 30 | 30 | 30 |
| RußN339 | 30 | 30 | 30 | 30 | 30 | 30 | 30 | 30 | 30 | 30 | 30 |
| Prozessöl | 16 | 16 | 16 | 16 | 16 | 16 | 16 | 16 | 16 | 16 | 16 |
| Stearinsäure | 2 | 2 | 2 | 2 | 2 | 2 | 2 | 2 | 2 | 2 | 2 |
| 6PPD | 1 | 3 | 5 | 1 | 1 | 1 | 1 | 1 | 3 | 5 | 3 |
| Hexadecylamin | - | - | - | - | - | 0,25 | 0,25 | 0,25 | 0,25 | 0,25 | 0,5 |
| Zinkoxid^{c} | 2,5 | 2,5 | 2,5 | 1,0 | 5,0 | 2,5 | 1,0 | 5,0 | 2,5 | 5,0 | 2,5 |
| Beschleuniger | 1,1 | 1,1 | 1,1 | 1,1 | 1,1 | 1,1 | 1,1 | 1,1 | 1,1 | 1,1 | 1,1 |
| Schwefel | 2,2 | 2,2 | 2,2 | 2,2 | 2,2 | 2,2 | 2,2 | 2,2 | 2,2 | 2,2 | 2,2 |
| **Eigenschaften** | | | | | | | | | | | |
| k₃₀k₉₀ | 0,541 | 0,612 | 0,677 | 0,655 | 0,517 | 0,566 | 0,663 | 0,535 | 0,672 | 0,704 | 0,677 |
| Reißdehnung bei RT [%] | 500 | 521 | 538 | 587 | 479 | 517 | 581 | 488 | 535 | 552 | 532 |
| Zugfestigkeit b. RT [N/mm²] | 12,8 | 12,9 | 12,8 | 10,2 | 13,1 | 13,1 | 11,0 | 12,8 | 13,7 | 13,6 | 13,8 |
| Ozonbeständigkeit 24 h | 2 | 0 | 0 | 2 | 2 | 2 | 2 | 2 | 0 | 0 | 0 |
| Ozonbeständigkeit 120 h | 4 | 2,5 | 1 | 4 | 4 | 4 | 4 | 4 | 2 | 1 | 2 |

| | | | | | | | | | | | |
|---|---|---|---|---|---|---|---|---|---|---|---|
| ^{a} High-cis Polybutadien ^{b} emulsionspolymerisiertes Styrol-Butadien-Copolymer, Styrolgehalt: 23,5 Gew.-%, Vinylanteil ca. 13 %, ESBR 1500, DOW Chemicals, USA ^{c} Zinkweiss Rotsiegel, Grillo Zinkoxid GmbH, Deutschland | | | | | | | | | | | |

Aus der Tabelle 1 wird ersichtlich, dass bei einer Zudosierung von 6PPD, Hexadecylamin und Zinkoxid in der erfindungsgemäßen Mengen besonders hohe Vernetzungsgeschwindigkeiten und besonders hohe Ozonbeständigkeiten bei verbesserter Reißdehnung und Zugfestigkeit erzielt werden können. Die Vorteile in der Reißdehnung und der Zugfestigkeit gehen dabei weit über den additiven Effekt der Einzelmaßnahmen hinaus und waren nicht zu erwarten.

## Patentansprüche

1. Schwefelvernetzbare Kautschukmischung, enthaltend
- zumindest einen Dienkautschuk,
- mehr als 1,5 phr zumindest eines p-Phenylendiaminderivats,
- 0,01 bis 0,5 phr zumindest eines Alkylamins und
- 1 bis 5 phr Zinkoxid.

2. Kautschukmischung nach Anspruch 1, **dadurch gekennzeichnet, dass** die Kautschukmischung 1,5 bis 4,5 phr des p-Phenylendiaminderivats enthält.

3. Kautschukmischung nach Anspruch 1 oder 2, **dadurch gekennzeichnet, dass** das p-Phenylendiaminderivat ein unsymmetrisch substituiertes N-Alkyl-N'-aryl-p-phenylendiamin ist.

4. Kautschukmischung nach Anspruch 3, **dadurch gekennzeichnet, dass** das unsymmetrisch substituierte N-Alkyl-N'-aryl-p-phenylendiamin N-(1,3-Dimethylbutyl)-N'-phenyl-p-phenylendiamin ist.

5. Kautschukmischung nach zumindest einem der vorhergehenden Ansprüche, **dadurch gekennzeichnet, dass** die Kautschukmischung 0,1 bis 0,3 phr des Alkylamins enthält.

6. Kautschukmischung nach zumindest einem der vorhergehenden Ansprüche, **dadurch gekennzeichnet, dass** das Alkylamin eine Alkylgruppe mit zumindest 5 Kohlenstoffatomen aufweist.

7. Kautschukmischung nach Anspruch 6, **dadurch gekennzeichnet, dass** das Alkylamin Hexadecylamin ist.

8. Kautschukmischung nach zumindest einem der vorhergehenden Ansprüche, **dadurch gekennzeichnet, dass** die Kautschukmischung 2 bis 3 phr Zinkoxid enthält.

9. Reifen, der zumindest zum Teil aus einer mit Schwefel vulkanisierten Kautschukmischung nach zumindest einem der Ansprüche 1 bis 8 besteht.

## Claims

1. Sulphur-crosslinkable rubber mixture comprising
- at least one diene rubber,
- more than 1.5 phr of at least one p-phenylenediamine derivative,
- from 0.01 to 0.5 phr of at least one alkylamine and
- from 1 to 5 phr of zinc oxide.

2. Rubber mixture according to Claim 1, **characterized in that** the rubber mixture comprises from 1.5 to 4.5 phr of the p-phenylenediamine derivative.

3. Rubber mixture according to Claim 1 or 2, **characterized in that** the p-phenylenediamine derivative is an asymmetrically substituted N-alkyl-N'-aryl-p-phenylenediamine.

4. Rubber mixture according to Claim 3, **characterized in that** the asymmetrically substituted N-alkyl-N'-aryl-p-phenylenediamine is N-(1,3-dimethylbutyl)-N'-phenyl-p-phenylenediamine.

5. Rubber mixture according to at least one of the preceding claims, **characterized in that** the rubber mixture comprises from 0.1 to 0.3 phr of the alkylamine.

6. Rubber mixture according to at least one of the preceding claims, **characterized in that** the alkylamine has an alkyl group having at least 5 carbon atoms.

7. Rubber mixture according to Claim 6, **characterized in that** the alkylamine is hexadecylamine.

8. Rubber mixture according to at least one of the preceding claims, **characterized in that** the rubber mixture comprises from 2 to 3 phr of zinc oxide.

9. Tyre which is at least to some extent composed of a sulphur-vulcanized rubber mixture according to at least one of Claims 1 to 8.

## Revendications

1. Mélange de caoutchouc réticulable par du soufre, contenant
- au moins un caoutchouc diène,
- plus de 1,5 phr d'au moins un dérivé de p-phénylène-diamine,
- 0,01 à 0,5 phr d'au moins une alkylamine et
- 1 à 5 phr d'oxyde de zinc.

2. Mélange de caoutchouc selon la revendication 1, **caractérisé en ce que** le mélange de caoutchouc contient 1,5 à 4,5 phr du dérivé de p-phénylène-diamine.

3. Mélange de caoutchouc selon la revendication 1 ou 2, **caractérisé en ce que** le dérivé de p-phénylène-diamine est une N-alkyl-N'-aryl-p-phénylène-diamine substituée de manière asymétrique.

4. Mélange de caoutchouc selon la revendication 3, **caractérisé en ce que** la N-alkyl-N'-aryl-p-phénylène-diamine substituée de manière asymétrique est la N-(1,3-diméthylbutyl)-N'-phényl-p-phénylène-diamine.

5. Mélange de caoutchouc selon au moins l'une quelconque des revendications précédentes, **caractérisé en ce que** le mélange de caoutchouc contient 0,1 à 0,3 phr de l'alkylamine.

6. Mélange de caoutchouc selon au moins l'une quelconque des revendications précédentes, **caractérisé en ce que** l'alkylamine comprend un groupe alkyle d'au moins 5 atomes de carbone.

7. Mélange de caoutchouc selon la revendication 6, **caractérisé en ce que** l'alkylamine est l'hexadécylamine.

8. Mélange de caoutchouc selon au moins l'une quelconque des revendications précédentes, **caractérisé en ce que** le mélange de caoutchouc contient 2 à 3 phr d'oxyde de zinc.

9. Pneu, qui est constitué au moins en partie d'un mélange de caoutchouc vulcanisé par du soufre selon au moins l'une quelconque des revendications 1 à 8.
